# EUROPÄISCHE PATENTSCHRIFT

(11) **EP 1 586 444 B1**
(45) Veröffentlichungstag und Bekanntmachung des Hinweises auf die Patenterteilung: **30.03.2016**
(21) Anmeldenummer: 04405226.4
(22) Anmeldetag: 14.04.2004
(51) Int. Cl.: B32B 17/06, B32B 17/10, C09K 21/02, C03C 17/00, F26B 21/06

(54) **Verfahren zum Herstellen einer aufschäumbaren Schicht auf einer Platte**
Process for forming an intumescent layer on a plate
Procédé pour la préparation d'une couche intumescente sur une plaque

(43) Veröffentlichungstag der Anmeldung: 19.10.2005
(73) Patentinhaber: Glas Trösch Holding AG, 6374 Buochs (CH)
(72) Erfinder: Bernhard, Rudolf, 4922 Bützberg (CH)
(74) Vertreter: Roshardt, Werner Alfred

(56) Entgegenhaltungen:
- WO-A-03/024682
- DE-A- 3 012 969
- DE-A- 3 012 973
- DE-A- 3 509 249
- DE-A- 4 224 053
- DE-C- 3 227 057

## Beschreibung

### Technisches Gebiet

Die Erfindung betrifft ein Verfahren zum Herstellen einer aufschäumbaren Schicht auf einer Platte, insbesondere einer Glasplatte, zum Herstellen eines Brandschutzelements, insbesondere eines Brandschutzglases, wobei eine wässrige Alkalisilicatlösung auf die Platte aufgegossen und danach in einem Trocknungsverfahren auf einen vorgegebenen Wasser-gehalt verfestigt wird. Die Erfindung betrifft ferner ein Verfahren zur Herstellung eines Verbundes aus mehreren Platten sowie eine Anlage zur Durchführung des erfindungsgemässen Verfahrens.

### Stand der Technik

Es ist bekannt, Brandschutzgläser herzustellen, indem mehrere Glasplatten miteinander verbunden werden, wobei zwischen den Glasplatten Zwischenschichten aus einem Silicat mit einer Schichtdicke im Millimeterbereich angeordnet werden. Diese Schichten sind transparent und weisen eine hohe Lichtdurchlässigkeit auf. Bei Hitzeeinwirkung schäumen die Zwischenschichten auf und entfalten so eine thermisch isolierende Wirkung. Gleichzeitig stabilisieren sie die Verglasung mechanisch, auch dann, wenn aufgrund der Hitze die Glasscheiben springen.

Die DE-OS 30 12 969 (BFG Glassgroup) zeigt beispielsweise ein Verfahren zur Herstellung einer Silicatschicht auf einer Glasplatte, bei welchem ein Alkalisilicat in wässriger Lösung auf die Glasplatte aufgebracht wird, worauf die Lösung durch Erhitzen getrocknet wird. Um die Bildung von Mikrobläschen, welche die optische Qualität der Schicht beeinträchtigen, zu verhindern, werden mindestens während eines Teils der Erhitzungsperiode ein oder mehrere Gase in einen Raumbereich über der wässrigen Silicatlösung eingebracht, wobei die Gase (im hydratisierten Silicat) weniger löslich sind als Sauerstoff und/oder die Dampfphase eines Lösungsmittels für die zu bildende Schicht sind.

Bei der EP 0 186 808 B1 (Flachglas) wird eine auf eine Glasscheibe aufgebrachte Schicht aus einem hydratisierten Metallsilicat in einer Trocknungskammer bei einer Temperatur von ca. 100 °C getrocknet. Die Beschichtung kann Hilfsstoffe wie Harnstoffe, mehrwertige Alkohole, Saccharide, Natriumphosphat, Natriumaluminat, Aluminiumphosphat, Borax, Borsäure etc. aufweisen. Um eine hohe Alterungsbeständigkeit zu erreichen, wird die Trocknungskammer mit Wasserdampf gefüllt und ein Teil des Wasserdampfs auskondensiert. Zusätzlich wird Helium und/oder Wasserstoff in die Kammer eingeleitet. Im Weiteren kann der Atmosphäre Argon und/oder Schwefelhexafluorid beigegeben werden.

Die WO 99/19421 (Glaverbel) beschreibt ein Material für eine Brandschutzverglasung, welches ein Alkalisilicat enthält sowie 5-22 % Additive wie Polyalkohole und/oder Mono- und Polysaccharide. Das molare Verhältnis von Siliziumoxid zu Natriumoxid ist grösser als 3.3:1. Ein Brandschutzglas kann durch einen Verbund von vier Glasplatten mit einer Dicke von jeweils 3.2 mm gebildet werden, zwischen welchen Materialschichten mit jeweils einer Dicke von 1.2 mm angeordnet sind.

Die CH 691 647 A5 (Glas Trösch) betrifft ein Verfahren zum Herstellen einer grossflächigen Alkalisilicatbeschichtung auf einer Glasplatte. Eine wässrige Alkalisilicatlösung wird auf die Glasplatte aufgegossen und zur Verfestigung gebracht, wobei während der Verfestigung ein elektrischer Strom in die aufgegossene Lösung eingeleitet wird. Das Einleiten des Stroms erfolgt über Platinelektroden, welche in der Lösung angeordnet sind. Nach Beendigung des Verfestigungsvorgangs wird jener Bereich der beschichteten Glasplatte, in welchem die Elektroden positioniert sind, weggeschnitten. Während des Verfestigungsvor-gangs bzw. in dessen Endphase wird der Glasplatte durch eine darunterliegende Heizfläche Wärme zugeführt.

Die DE 30 12 973 A (BFG Glassgroup) beschreibt ein Verfahren zur Herstellung einer lichtdurchlässigen Schichtkörperfeuerschutzwandung, die wenigstens eine Zwischenschicht aus blähfähigem Material aufweist. Die Zwischenschicht ist dabei zwischen wenigstens zwei Scheiben aus Glas oder glasartigem Material angeordnet. Dabei wird eine Atmosphäre zwischen den Scheiben hergestellt, während die Scheiben zu einer Sandwich- oder Schichtkörperkonstellation zusammengebracht werden. Mindestens ein Bestandteil der Atmosphäre ist dabei in der blähfähigen Schicht lösbarer als Luft. Die Schichtkörpergruppe wird dabei einer Wärme und/oder Druckbehandlung unterzogen. Zur Trocknung der blähfähigen Schicht wird diese bevorzugt in einer relativ feuchten Atmosphäre in einer heizbaren Trocknungskammer gelagert. Nach dem Trocknen und während des Zusammenfügens zweier Scheiben zu einem Schichtkörper wird ein Dampf einer Temperatur von 102°C zwischen die auf 105°C geheizten Scheiben geleitet.

Die DE 42 24 053 (Glaverbel) betrifft eine transparente, feuerbeständige Verglasungsplatte mit wenigstens einer Schicht von blähbarem Material, die an wenigstens eine Konstruktionslage der Platte gebunden ist. Die Schicht aus blähbarem Material wird dabei durch Verdichten von Körnern eines blähbaren hydratisierten Metallsalzes erzeugt und weist einen Gesamtwassergehalt von 20-26 % auf. Eine solche blähbare Schicht zeigt bessere Witterungseigenschaften als eine Schicht, deren blähbares Material einen höheren Wassergehalt von etwa 29-34 % aufweist. Es wird ein Brandschutzglas beschrieben, das aus drei Glasscheiben von je 3 mm Stärke und zwei blähbaren Zwischenschichten von je 1.5 mm Stärke besteht.

Es hat sich gezeigt, dass bei den aus dem Stand der Technik bekannten Brandschutzverglasungen eine hohe Anzahl von Glasschichten und/oder dicke Gläser und Zwischenschichten notwendig sind, damit eine Brandfestigkeit erreicht werden kann, mit welcher übliche Test- und Zertifizierverfahren bestanden werden können.

### Darstellung der Erfindung

Aufgabe der Erfindung ist es, ein dem eingangs genannten technischen Gebiet zugehörendes Verfahren zu schaffen, welches die Herstellung eines Brandschutzelements mit gleicher Brandfestigkeit bei dünnerem Elementquerschnitt erlaubt. Es kann sich hierbei insbesondere um eine Brandschutzverglasung mit gleicher Brandfestigkeit bei dünneren Glasquerschnitten handeln.

Die Lösung der Aufgabe ist durch die Merkmale des Anspruchs 1 definiert. Gemäss der Erfindung wird ein Raumbereich über der aufgegossenen wässrigen Alkalisilicatlösung auf eine vorgegebene Temperatur gebracht und die Platte von unten durch ein Heizsystem mit einer gegenüber der vorgegebenen Temperatur um eine Temperaturdifferenz ΔT höheren Temperatur beaufschlagt, wobei die Temperaturdifferenz ΔT höchstens 5°C, bevorzugt höchstens 3°C beträgt.

Die Temperaturdifferenz ΔT ist so gewählt, dass ein vorzeitiges Austrocknen der obersten Schicht vermieden wird, aber noch keine Blasenbildung in der Silicatschicht auftritt, wie dies bei grösseren Temperaturdifferenzen der Fall wäre. Die geringfügige Temperaturdifferenz ΔT und der dadurch bewirkte Temperaturgradient in der Silicatschicht führen zu einer gleichmässigen Trocknung der Schicht und damit zu einer gleichmässigen Feuchtigkeitsverteilung. Das Auftreten von Rissen in der Schicht wird verhindert. Dadurch werden Schwachstellen in der schaumbildenden Schicht, welche letztlich die Brandfestigkeit bestimmen, eliminiert. Bei einer Brandschutzverglasung kann dieselbe Brandfestigkeit deshalb mit einer geringeren Anzahl von Schichten und/oder Schichten und Zwischenschichten geringerer Dicke erreicht werden.

Die Temperaturdifferenz ΔT beträgt höchstens 5°C, bevorzugt höchstens 3°C. Bei einer derartigen Temperaturdifferenz werden das vorzeitige Austrocknen der obersten Schicht der zu trocknenden wässrigen Alkalisilicatlösung sowie das Auftreten von Blasen in der Lösung vermieden.

Die zu wählende Temperaturdifferenz kann der Dicke und Zusammensetzung der Platte und der aufgegossenen wässrigen Alkalisilicatlösung sowie der vorgegebenen Temperatur des Raumbereichs über der Silicatlösung angepasst werden. Bei den üblicherweise für Brandschutzgläser verwendeten Glasplatten und bei Silicatschichten im Millimeterbereich ist aber eine Temperaturdifferenz ΔT von mindestens 1°C empfehlenswert, damit der erfindungsgemässe Effekt zum Tragen kommt.

Vorzugsweise wird das Heizsystem durch eine Heizplatte, insbesondere eine Metallplatte, mit einer mit der Platte in Kontakt stehenden, beheizbaren Oberfläche gebildet. Die Oberfläche wird derart beheizt, dass ein maximaler Temperaturunterschied zwischen einem beliebigen ersten Ort auf der Oberfläche und einem beliebigen anderen Ort auf der Oberfläche höchstens 0.4°C beträgt. Die grossflächige thermische Kontaktierung der Platte durch eine temperierte Oberfläche und die gleichmässige Temperaturverteilung unterstützen das gleichmässige Trocknen der wässrigen Alkalisilicatlösung. Zusätzlich wird durch die grossflächige Auflage verhindert, dass die Platte zwischen beabstandet positionierten kleinflächigen Auflagen durchhängt, was zu einer ungleichmässigen Verteilung der Silicatlösung auf der Oberfläche der Platte führen würde.

Alternativ kann die Unterseite der Platte beispielsweise durch ein temperiertes Gas oder eine Flüssigkeit mit der gewünschten Temperatur beaufschlagt werden.

Mit Vorteil beträgt der vorgegebene Wassergehalt 25-35 Gew.%. Dieser Wassergehalt ist hoch genug, dass im Brandfall in einer ersten Phase eine hohe Wärmeaufnahme und damit eine gute Brandschutzwirkung erreicht wird. Gleichzeitig ist er aber nicht so hoch, dass die Langzeitstabilität der aufschäumbaren Schicht beeinträchtigt ist.

Alternativ, abhängig von der Konfiguration des Brandschutzelements, kann der vorgegebene Wassergehalt auch anders, insbesondere tiefer, gewählt werden. Bei einem allzu hohen Wassergehalt (z. B. 40 Gew.% oder mehr) leidet die Stabilität und Altersbeständigkeit der aufschäumbaren Schicht.

Mit Vorteil weist die wässrige Alkalisilicatlösung einen Anteil von 30-40 Gew.%, bevorzugt ungefähr 35 Gew.%, Alkalisilicat und 60-70 Gew.% Wasser auf, wobei es sich beim Silicat um Natriumsilicat handelt mit einem molaren Verhältnis von SiO₂ zu Natriumoxid von ungefähr 3.3:1. Es hat sich gezeigt dass die angegebenen Werte und Materialien die Herstellung einer Brandschutzverglasung mit besonders vorteilhafter Brandschutzwirkung erlauben.

Mit Vorteil umfasst die wässrige Alkalisilicatlösung weiter einen Anteil von 0.3-4 %, bevorzugt 0.5-1.5%, Polyalkohole und 0.005-0.2 %, bevorzugt 0.008-0.020 %, eines Tensids. Durch das Tensid wird die Oberflächenspannung der Silicatlösung verringert. Überraschenderweise hat sich gezeigt, dass die vergleichsweise geringen Anteile der Additive ausreichend sind.

Bevorzugt wird der Raumbereich über der aufgegossenen Alkalisilicatlösung auf eine vorgegebene Luftfeuchtigkeit gebracht. Die Kontrolle der Luftfeuchtigkeit ermöglicht einen kontrollierten und effizienten Trocknungsvorgang.

Vorzugsweise wird die Luftfeuchtigkeit zumindest während einer ersten Phase auf mehr als 70-80 % gehalten. Die Temperatur wird allmählich angehoben, so dass die aufgegossene wässrige Alkalisilicatlösung eine Temperatur von ca. 50-80 °C erreicht. Anschliessend wird die Temperatur der Luft wieder abgesenkt. Es hat sich gezeigt, dass dadurch eine schnelle und gleichmässige Verfestigung der Silicatschicht erreicht wird. Die Trocknungszeit ist abhängig vom gewünschten Restwassergehalt, den Prozessparametern und den Spezifikationen der festen Silicatschicht und beträgt mehrere Stunden.

Die Trocknungszeit kann durch den Einsatz von Klimakammern und durch das Überströmen mit ausgewählten Trocknungsgasen (z. B. mit Kohlendioxid oder Sauerstoff angereicherte Luft) verkürzt werden, wobei sich allerdings entsprechend höhere Anlagekosten ergeben.

Mit Vorteil ist bei einem Trocknungsverfahren für eine auf eine Platte aufgegossene Alkalisilicatlösung der Raumbereich über der aufgegossenen Lösung durch eine Dampfdiffusionsbremse in eine erste, direkt über der Platte liegende Raumschicht und eine zweite, darüber liegende Raumschicht unterteilt. Die erste Raumschicht wird auf eine vorgegebene Temperatur und relative Feuchte gebracht. Damit wird erreicht, dass die Luftsäule unmittelbar über der zu trocknenden Schicht von den Luftströmungen in der zweiten, darüber liegenden Raumschicht unbeeinflusst bleibt. Die Temperatur und die Feuchtigkeit der Luftsäule sind daher über der gesamten Oberfläche der Platte jeweils konstant. Die infolge des Trocknungsprozesses aus der Schicht austretende Feuchte wird durch die Dampfdiffusionsbremse hindurch gleichmässig an die Raumluft der zweiten, oberen Raumschicht abgegeben. Für die Dampfdiffusionsbremse können Mikrofaserstoffe, nicht hygroskopisch wirkende Faserfilter, Papiere oder andere geeignete Materialien eingesetzt werden.

Die Kombination der Dampfdiffusionsbremse mit der Einstellung einer Temperaturdifferenz zwischen Plattenoberseite und -unterseite ermöglicht eine besonders effiziente und gleichmässige Trocknung der Alkalisilicatschicht. Trotzdem sind beide Verfahrensaspekte unabhängig voneinander zur Optimierung des Trocknungsprozesses einer solchen Schicht einsetzbar.

Eine Anlage zum Herstellen einer aufschäumbaren Schicht auf einer Platte zum Herstellen eines Brandschutzelements, wobei eine wässrige Alkalisilicatlösung auf die Platte aufgegossen und danach in einem Trocknungsverfahren auf einen vorgegebenen Wassergehalt verfestigt wird, umfasst
a) eine Haltevorrichtung für die Platte;
b) ein Heizsystem zum Beheizen der Unterseite der Platte;
c) eine Vorrichtung zum Temperieren des Raumbereichs oberhalb der Platte; und
d) eine Steuerung zum Steuern des Heizsystems und der Vorrichtung zum Temperieren, welche derart ausgebildet ist, dass die Platte auf der Unterseite mit einer Temperatur beaufschlagt werden kann, welche um eine Temperaturdifferenz ΔT höher ist als eine vorgegebene Temperatur des Raumbereichs oberhalb der Platte, wobei die Temperaturdifferenz ΔT höchstens 5°C, bevorzugt höchstens 3°C beträgt.

Zum Temperieren des Raumbereichs oberhalb der aufgegossenen Silicatlösung auf die vorgegebene Temperatur umfasst die Anlage mit Vorteil eine Heizeinheit. Bevorzugt ist zum Einstellen der Feuchtigkeit der Luft eine Be- und/oder Entfeuchtereinheit enthalten.

Bei einem Verfahren zur Herstellung eines Verbundes aus mehreren Platten, insbesondere Glasplatten, wird gemäss einem oben beschriebenen Verfahren auf einer ersten Platte eine aufschäumbare Schicht hergestellt. Auf diese Schicht wird eine zweite Platte aufgebracht, indem die zweite Platte entlang einer Kante unter einem Winkel auf die Schicht aufgelegt und eine Zusammenbauflüssigkeit im Winkel aufgetragen wird und indem schliesslich die zweite Platte auf die Schicht abgelegt wird. Dadurch wird zuverlässig vermieden, dass Lufteinschlüsse zwischen den Platten entstehen, welche in Bezug auf die Brandfestigkeit nachteilig sind. Gleichzeitig wird eine gleichmässige Verteilung der Zusammenbauflüssigkeit erreicht. Platten können zusammengebaut werden, indem eine beschichtete Seite der ersten Platte an eine unbeschichtete Seite der zweiten Platte oder indem beschichtete Seiten gegeneinander gefügt werden. Das beschriebene Verfahren zur Herstellung des Platten-Verbundes, also des eigentlichen Brandschutzelements, wird wiederholt bis die gewünschte Anzahl Schichten miteinander verbunden sind.

Zum Zusammenkleben der Platten kann als Zusammenbauflüssigkeit unter anderem Wasser oder ein Klebstoff, z. B. auf Epoxidharzbasis, eingesetzt werden.

Alternativ können die Platten beispielsweise im Wasserbad zusammengefügt werden, oder es wird lediglich die zwischenliegende Silicatschicht mit Wasser befeuchtet, so dass das Silicat oberflächlich angelöst wird.

Nach dem Aufbringen der zweiten Platte kann der Verbund noch in einem Autoklaven nachlaminiert werden. Dadurch wird die Verklebung verbessert und unter Anderem bewirkt, dass die Zwischenschicht aufgeweicht wird, so dass allenfalls noch zwischen den Platten vorhandene Flüssigkeit in die Zwischenschicht hinein diffundiert.

Ein erfindungsgemässes Brandschutzglas umfasst mindestens eine Glasplatte, auf welcher eine aufschäumbare Schicht aufgebracht ist, welche durch ein oben beschriebenes Verfahren erhältlich ist. Bevorzugt wird die aufschäumbare Schicht auf der Gegenseite durch eine zweite Glasplatte abgeschlossen. Ähnlicherweise können drei, vier oder mehr Glasschichten und entsprechend jeweils eine aufschäumbare Schicht weniger zu Brandschutzgläsern kombiniert werden. Die Spezifikationen, also z. B. das Material oder die Dicke, der einzelnen Zwischenschichten sowie der Glasplatten müssen jeweils nicht identisch sein. Bei geringeren Anforderungen an die Brandfestigkeit kann ein erfindungsgemässes Brandschutzglas auch nur eine Glasplatte aufweisen sowie beispielsweise eine transparente Folie, welche die aufschäumbare Schicht gegen die andere Seite hin abschliesst.

Mit Vorteil weist das Brandschutzglas genau drei Glasplatten auf, zwischen denen jeweils eine aufschäumbare Schicht angeordnet ist. Die Glasplatten haben eine Dicke von jeweils 1.5-3.5 mm, bevorzugt ungefähr 3 mm. Die dazwischen angeordneten Schichten haben eine Dicke von 0.5-1.5 mm, bevorzugt ungefähr 1 mm. Überraschend erfüllt ein derartiges Glas in einer entsprechenden Rahmenkonstruktion den 30-minütigen Feuerwiderstandstest gemäss DIN 4102ff. und DIN EN 1363ff. Bisherige Brandschutzgläser in dieser Klasse weisen oft vier Glasschichten auf und sind damit dicker, schwerer und teurer als das erfindungsgemässe Brandschutzglas.

Selbstverständlich lassen sich auch Brandschutzgläser mit anderen Spezifikationen, z. B. für andere Brandschutzanforderungen, herstellen, welche eine oder mehrere der erfindungsgemässen aufschäumbaren Schichten aufweisen. Soll beispielsweise ein Brandschutzglas der Feuerwiderstandsklasse F90 hergestellt werden, sind entsprechend mehr und/oder dickere Glas/Silicat-Schichten vorzusehen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung des Herstellungsprozesses einer erfindungsgemässen aufschäumbaren Schicht;
- Fig. 2: eine schematische Darstellung der Unterstützung des Trocknungsprozesses durch eine Dampfdiffusionsbremse;
- Fig. 3: eine schematische Darstellung des Wegschneidens der Ablaufschutzwand;
- Fig. 4: eine qualitative Darstellung des Temperaturverlaufs während des Trocknungsprozesses;
- Fig. 5: eine schematische Darstellung der Steuerung der Systeme zur Temperierung der Trocknungsluft und der Auflageplatte;
- Fig. 6: eine schematische Darstellung des Verfahrens zum Verbinden zweier Glasplatten;
- Fig. 7: eine schematische Darstellung eines erfindungsgemässen Brandschutzglases.

Grundsätzlich sind in den Figuren gleiche Teile mit gleichen Bezugszeichen versehen.

### Wege zur Ausführung der Erfindung

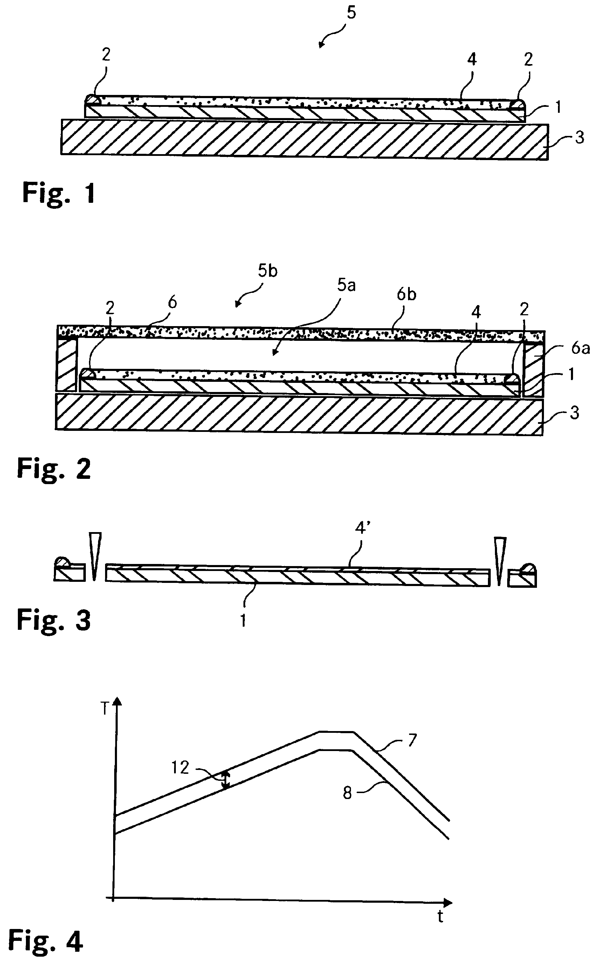

Anhand der Figur 1 wird im Folgenden ein erfindungsgemässes Verfahren zur Herstellung einer aufschäumbaren Schicht auf einer Glasplatte zum Herstellen eines Brandschutzglases beschrieben.

Es wird eine wässrige Alkalisilicatlösung bereitgestellt aus 65 Gew.% Wasser und 35 Gew.% Natriumsilicat. Die Lösung enthält kein Kaliumsilicat, und das molare Verhältnis von Siliziumoxid SiO₂ zum Alkalioxid beträgt ca. 3.3:1. Dieser Lösung werden zwei Additive zugegeben, nämlich 1.5 % Glycerin und 0.02 % eines Tensids.

Auf eine flache Glasplatte 1 wird eine umlaufende Ablaufschutzwand 2 aus einer handelsüblichen Dichtmasse, z. B. einer Silikonmasse, aufgetragen, so dass eine Wanne gebildet wird, wobei der Wannenboden durch die Glasplatte 1 und die Wannenwände durch die Ablaufschutzwand 2 gebildet werden. Die Glasplatte 1 wird auf eine horizontale Heizplatte 3 aufgelegt. Deren Oberfläche kann derart temperiert werden, dass die maximale Temperaturdifferenz zwischen zwei beliebigen Punkten der Oberfläche höchstens 0.4 °C beträgt.

Die flüssige Silicatlösung 4 wird nun in einer solchen Menge in die Wanne eingefüllt, dass sie eine ca. 4 mm tiefe Flüssigkeitsschicht bildet. Die Dicke der Flüssigkeitsschicht kann dabei durch die Höhe der Ablaufschutzwand 2 auf einfache Weise vorgegeben werden.

Die Silicatlösung 4 wird während ca. 3 Tagen unter Umgebungsdruck getrocknet, bis ihr Wasseranteil auf 25-35 % abgesunken ist. Nach dem Trocknungsprozess hat die Silicatschicht 4' eine harte, glasähnliche Konsistenz und ist noch ca. 1.5 mm dick. Das Trocknen erfolgt durch gleichzeitiges Erwärmen der Heizplatte 3, auf welcher die Glasplatte 1 aufgelegt ist, und durch Temperieren des Raumbereichs oberhalb der Silicatlösung 4.

Dabei werden die Luftfeuchtigkeit und die Temperatur des Raumbereichs 5 geregelt. Die relative Luftfeuchtigkeit wird zunächst konstant auf ca. 80 % relativer Feuchtigkeit gehalten. Die Temperatur der Silicatlösung 4 wird durch Regeln der Temperatur 7 der Heizplatte 3 und der Temperatur 8 des oberen Raumbereichs 5 langsam auf höchstens 70 °C erhöht, danach wieder abgesenkt, wie schematisch in der Figur 4 dargestellt.

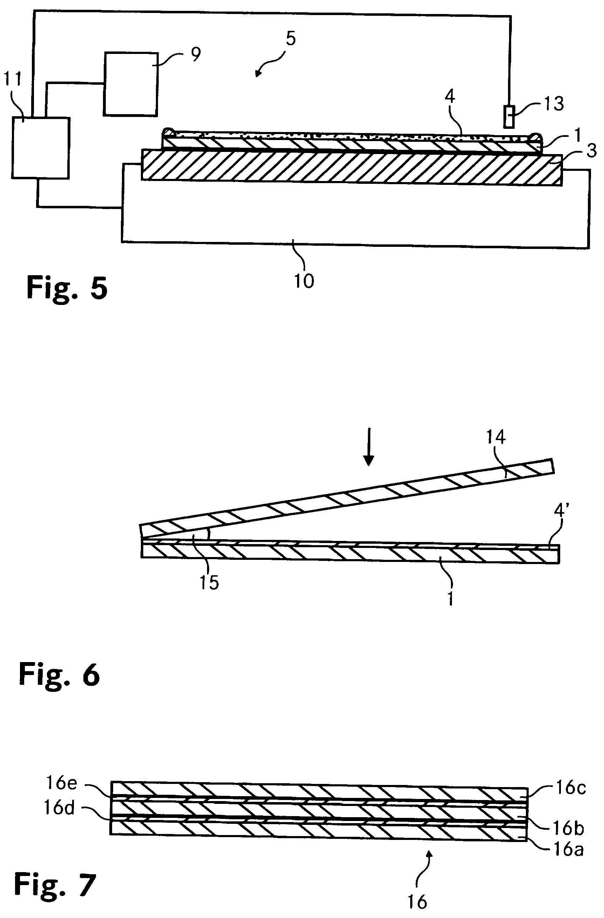

Die Figur 5 ist eine schematische Darstellung der Steuerung der Systeme zur Temperierung der Trocknungsluft und der Auflageplatte. Die Vorrichtung 9 zur Temperierung des Raumbereichs 5 sowie die Vorrichtung 10 zum Aufheizen der Heizplatte 3 werden von einer zentralen Steuerung 11 gemeinsam so gesteuert, dass die Temperatur 7 der Heizplatte 3 permanent um eine Temperaturdifferenz 12 von ca. 3 °C höher ist als die Temperatur 8 des Raumbereichs 5. Die Temperatur der Silicatlösung 4 wird dabei durch eine Messsonde 13 überwacht, welche ebenfalls mit der zentralen Steuerung 11 verbunden ist.

Nach Beendigung des Trocknungsprozesses werden die die Ablaufschutzwand 2 tragenden Randpartien der mit der Silicatschicht 4' versehenen Glasplatte 1 weggeschnitten, wie in der Figur 3 schematisch dargestellt.

Der Trocknungsprozess kann, wie in der Figur 2 schematisch dargestellt, durch die Anordnung einer Dampfdiffusionsbremse unterstützt werden. Die Dampfdiffusionsbremse 6 besteht aus einem umlaufenden Rahmen 6a, auf dessen Oberseite eine Membran 6b aus einem Mikrofaserstoff aufgespannt ist. Die Membran 6b teilt den Raumbereich oberhalb der zu trocknenden Silicatschicht 4 in einen unteren, direkt über der Schicht liegenden Raumbereich 5a und einen oberen Raumbereich 5b oberhalb der Membran 6b. Die Membran 6b erlaubt den Wärmeaustausch zwischen den Raumbereichen 5a, 5b und auch die Abgabe von Feuchte aus dem unteren Raumbereich 5a an die Raumluft des oberen Raumbereichs 5b. Sie verhindert aber, dass sich Luftströmungen des oberen Raumbereichs 5b, welche beispielsweise durch die Temperierung oder durch Konvektion hervorgerufen werden, auf den unteren Raumbereich 5a auswirken können. Die Trocknung der Silicatschicht 4 kann somit erfolgen, ohne dass im unteren Raumbereich 5a unmittelbar über der Silicatschicht 4 Luftströmungen auftreten, welche zu einer ungleichmässigen Trocknung führen können.

Die Kombination der Dampfdiffusionsbremse mit der Temperierung der Glasplatte 1 sowohl auf deren Ober- als auch auf deren Unterseite führt zu einer besonders effizienten und gleichmässigen Trocknung der Silicatschicht 4. Beide Verfahrensaspekte sind aber auch unabhängig voneinander realisierbar, abhängig vom gewünschten Ablauf des Trocknungsvorgangs und den gegebenen Rahmenbedingungen.

Zur Herstellung eines Brandschutzglases wird nun eine gewünschte Anzahl Glasplatten nacheinander auf die Glasplatte 1 mit der Silicatschicht 4' aufgebracht. Eine weitere Glasplatte 14 wird zunächst entlang eines Längsrandes unter einem Winkel auf die Silicatschicht 4' aufgelegt. Dann wird im Winkel als Zusammenbauflüssigkeit 15 Wasser aufgetragen. Die weitere Glasplatte 14 wird sodann vom Rand her auf die Silicatschicht 4' abgelegt.

Der Verbund aus den beiden Glasplatten 1, 14 und der Silicat-Zwischenschicht 4' wird anschliessend in einem Autoklaven nachlaminiert, ähnlich einem Verbundsicherheitsglas-Laminierungsprozess.

Der Vorgang wird wiederholt, um ein Brandschutzglas herzustellen, wie in der Figur 7 schematisch dargestellt. Das Brandschutzglas 16 weist 3 Glasschichten 16a, 16b, 16c aus Floatglas mit je einer Dicke von 3.0 mm und 2 Zwischenschichten 16d, 16e aus Silicat mit je einer Dicke von 1.5 mm auf. Dieses Brandschutzglas 16 in einer entsprechenden Rahmenkonstruktion mit einer Gesamtdicke von 12 mm entspricht gemäss DIN 4102ff. und DIN EN 1369ff. den Anforderungen der Feuerwiderstandsklasse F30 und ist damit dünner, leichter und preisgünstiger herstellbar als vergleichbare Brandschutzverglasungen.

Das erfindungsgemässe Verfahren lässt sich auf unterschiedliche Weise ausführen. Beispielsweise kann das Aufheizen auf der Unterseite der Glasscheibe ebenfalls mittels eines zirkulierenden Gassstroms erfolgen. In diesem Fall wird die Glasplatte von in der Fläche verteilten Stützpunkten getragen, so dass die Oberfläche sehr plan liegt. Die Lage der Platte muss an jedem Ort eine identische Flüssigkeitstiefe gewährleisten. Beim Trocknungsprozess können zudem andere Gase eingesetzt werden, oder er kann bei einem anderen Druck erfolgen.

Der Verlauf der Temperaturen des Raumbereichs über der Silicatlösung und der Glasplatte kann unterschiedlich vom dargestellten Beispiel gewählt werden. Auch die Differenz der Temperaturen muss während des Verfahrensablaufs nicht konstant sein.

Der Trocknungsprozess kann in der aus der CH 691 647 A5 bekannten Weise durch Einleiten eines elektrischen Stroms in die Silicatlösung zusätzlich unterstützt werden.

Auch die Zusammensetzung der wässrigen Alkalisilicatlösung kann im Rahmen der Erfindung variiert werden. Beispielsweise kann ein unterschiedlicher Wassergehalt gewählt werden, ein unterschiedlicher Gehalt an Additiven, andere Additive wie Saccharide oder mehrwertige Alkohole oder ein anderes molares Verhältnis von Siliziumoxid zu Natriumoxid.

Anstelle einer Ablaufschutzwand aus einer Silikondichtmasse kann auch dadurch eine Wanne für die Silicatlösung gebildet werden, dass ein Klebestreifen den Rändern der Glasplatte entlang angebracht wird, so dass eine umlaufende Begrenzung gebildet wird.

Auch der Zusammenbau der Glasplatten zu einem Verbund kann auf andere Weise erfolgen, beispielsweise im Wasserbad oder indem als Zusammenbauflüssigkeit Wasser verwendet wird, welches mit einer synthetischen Seife versetzt ist.

Zusammenfassend ist festzustellen, dass durch die Erfindung ein Verfahren zum Herstellen einer aufschäumenden Schicht auf einer Glasplatte geschaffen wird, welches die Herstellung eines Brandschutzglases mit höherer Brandfestigkeit bei gleichem Querschnitt erlaubt.

## Patentansprüche

1. Verfahren zum Herstellen einer aufschäumbaren Schicht (4') auf einer Platte (1), insbesondere einer Glasplatte, zum Herstellen eines Brandschutzelements (16), insbesondere eines Brandschutzglases, wobei eine wässrige Alkalisilicatlösung (4) auf die Platte (1) aufgegossen und danach in einem Trocknungsverfahren bei Umgebungsdruck auf einen vorgegebenen Wassergehalt verfestigt wird, **dadurch gekennzeichnet, dass** ein Raumbereich (5) über der aufgegossenen Alkalisilicatlösung (4) auf eine vorgegebene Temperatur (8) gebracht wird und die Platte (1) von unten durch ein Heizsystem (3, 10) mit einer gegenüber der vorgegebenen Temperatur (8) um eine Temperaturdifferenz ΔT (12) höheren Temperatur (7) beaufschlagt wird, wobei die Temperaturdifferenz ΔT höchstens 5°C, bevorzugt höchstens 3°C beträgt und wobei die Luftfeuchtigkeit des Raumbereichs (5) zumindest während einer ersten Phase auf mehr als 70-80 % gehalten wird, und dass eine Temperatur (8) des Raumbereichs (5) allmählich angehoben wird, bis die aufgegossene Silicatlösung (4) eine Temperatur von ca. 50-80 °C erreicht, und anschliessend wieder abgesenkt wird.

2. Verfahren nach Anspruch 1, **dadurch gekennzeichnet, dass** das Helzsystem durch eine Heizplatte (3), insbesondere eine Metallplatte, mit einer mit der Platte (1) in Kontakt stehenden, beheizbaren Oberfläche gebildet wird, wobei die Oberfläche derart beheizt wird, dass ein maximaler Temperaturunterschied zwischen einem beliebigen ersten Ort auf der Oberfläche und einem beliebigen anderen Ort auf der Oberfläche höchstens 0.4°C beträgt.

3. Verfahren nach einem der Ansprüche 1 oder 2, **dadurch gekennzeichnet, dass** der vorgegebene Wassergehalt 25-35 Gew.% beträgt.

4. Verfahren nach einem der Ansprüche 1 bis 3, **dadurch gekennzeichnet, dass** die wässrige Alkalisilicatlösung (4) einen Anteil von 30-40 Gew.%, bevorzugt ungefähr 35 Gew.%, Alkalisilicat und 60-70 Gew. % Wasser aufweist, wobei es sich beim Silicat um Natriumsilicat handelt mit einem molaren Verhältnis von SiO2 zu Natriumoxid von ungefähr 3.3:1.

5. Verfahren nach Anspruch 4, **dadurch gekennzeichnet, dass** die Silicatlösung (4) weiter einen Anteil von 0.3-4 %, bevorzugt 0.5-1.5 %, Polyalkohole und 0.005-0.2 %, bevorzugt 0.008-0.020 %, eines Tensids umfasst.

6. Verfahren nach einem der Ansprüche 1 bis 5, **dadurch gekennzeichnet, dass** der Raumbereich (5) über der aufgegossenen Alkalisilicatlösung auf eine vorgegebene Luftfeuchtigkeit gebracht wird.

7. Verfahren, insbesondere nach einem der Ansprüche 1 bis 6, zum Herstellen einer aufschäumbaren Schicht (4') auf einer Platte (1), insbesondere einer Glasplatte, wobei eine wässrige Alkalisilicatlösung (4) auf die Platte (1) aufgegossen und danach in einem Trocknungsverfahren auf einen vorgegebenen Wassergehalt verfestigt wird, **dadurch gekennzeichnet, dass** ein Raumbereich (5) über der aufgegossenen Alkalisilicatlösung (4) durch eine Dampfdiffusionsbremse (6) in eine erste, direkt über der Platte (1) liegende Raumschicht (5a) und eine zweite, darüber liegende Raumschicht (5b) unterteilt wird, wobei die erste Raumschicht (5a) auf eine vorgegebene Temperatur und relative Feuchte gebracht wird.

8. Verfahren zur Herstellung eines Verbundes aus mehreren Platten (1, 14), insbesondere Glasplatten, **dadurch gekennzeichnet, dass** durch ein Verfahren nach einem der Ansprüche 1 bis 7 auf einer ersten Platte (1) eine aufschäumbare Schicht (4') hergestellt wird, und dass auf die getrocknete aufschäumbare Schicht (4') eine zweite Platte (14) aufgebracht wird, indem die zweite Platte (14) entlang einer Kante unter einem Winkel auf die Schicht (4') aufgelegt wird, eine Zusammenbauflüssigkeit (15) im Winkel aufgetragen wird und indem schliesslich die zweite Platte (14) auf die Schicht (4') abgelegt wird.

9. Verfahren nach Anspruch 8, **dadurch gekennzeichnet, dass** nach dem Aufbringen der zweiten Platte (13) der Verbund in einem Autoklaven nachlaminiert wird.

10. Anlage zur Durchführung des Verfahrens nach einem der Ansprüche 1 bis 7 umfassend
a) eine Haltevorrichtung (3) für eine Platte (1);
b) ein Heizsystem (3, 10) zum Beheizen einer Unterseite der Platte (1);
c) eine Vorrichtung (9) mit einer Heizeinheit zum Temperieren eines Raumbereichs (5) oberhalb der Platte (1) auf eine vorgegebene Temperatur (8) und mit einer Be- und/oder Entfeuchtereinheit zum Einstellen einer Luftfeuchtigkeit der temperierten Umgebungsluft; und
d) eine Steuerung zum Steuern des Heizsystems (3, 10) und der Vorrichtung (9) zum Temperieren, welche derart ausgebildet ist, dass die Platte (1) auf der Unterseite mit einer Temperatur (7) beaufschlagt werden kann, welche um eine Temperaturdifferenz ΔT (12) höher ist als die vorgegebene Temperatur (8) des Raumbereichs oberhalb der Platte (1), wobei die Temperaturdifferenz ΔT (12) höchstens 5°C, bevorzugt höchstens 3°C beträgt.

11. Anlage nach Anspruch 10, zur Durchführung des Verfahrens nach Anspruch 8, **gekennzeichnet durch** eine Dampfdiffusionsbremse (6), welche oberhalb der Platte (1) angeordnet ist und den Raumbereich (5) in zwei übereinander liegende Raumschichten (5a, 5b) unterteilt.

12. Anlage nach Anspruch 10 oder 11, **dadurch gekennzeichnet, dass** das Heizsystem (3, 10) eine Heizplatte (3), insbesondere eine Metallplatte, umfasst, welche gleichzeitig als Auflage für die Platte (1) dient, wobei eine Oberfläche der Heizplatte (3) derart beheizbar ist, dass ein maximaler Temperaturunterschied zwischen einem beliebigen ersten Ort auf der Oberfläche und einem beliebigen zweiten Ort auf der Oberfläche höchstens 0.4 °C beträgt.

## Claims

1. Process for the production of a foamable layer (4') on a sheet (1) of hard material, in particular on a sheet of glass, for the production of a fire-resistant element (16), in particular of a fire-resistant glass, where an aqueous alkali metal silicate solution (4) is cast onto the sheet (1) and then is hardened in a drying process at ambient pressure to a prescribed water content, **characterized in that** a region (5) of space above the alkali metal silicate solution (4) applied by casting is brought to a prescribed temperature (8), and the sheet (1) is exposed from below via a heating system (3, 10) to a temperature (7) which is higher by a temperature difference ΔT (12) than the prescribed temperature (8), where the temperature difference ΔT is at most 5°C, preferably at most 3°C, and where the humidity of the region (5) of space is maintained at least during a first phase at more than 70-80%, and that the temperature (8) of the region (5) of space is gradually raised until the temperature of the silicate solution (4) applied by casting reaches about 50-80°C, and then is in turn lowered.

2. Process according to Claim 1, **characterized in that** the heating system is formed by a hotplate (3), in particular a metal plate, with a heatable surface in contact with the sheet (1) of hard material, where the surface is heated in such a way that the maximal temperature difference between any desired first location on the surface and any desired other location on the surface is at most 0.4°C.

3. Process according to Claim 1 or 2, **characterized in that** the prescribed water content is from 25 to 35% by weight.

4. Process according to any of Claims 1 to 3, **characterized in that** the aqueous alkali metal silicate solution (4) has from 30 to 40% by weight, preferably about 35% by weight, content of alkali metal silicate and from 60 to 70% by weight content of water, where the silicate is sodium silicate with a molar SiO₂:sodium oxide ratio of about 3.3:1.

5. Process according to Claim 4, **characterized in that** the silicate solution (4) moreover comprises from 0.3 to 4%, preferably from 0.5 to 1.5%, content of polyalcohols and from 0.005 to 0.2%, preferably from 0.008 to 0.020%, content of a surfactant.

6. Process according to any of Claims 1 to 5, **characterized in that** the region (5) of space above the alkali metal silicate solution applied by casting is brought to a prescribed humidity.

7. Process, in particular according to any of Claims 1 to 6, for the production of a foamable layer (4') on a sheet (1) of hard material, in particular on a sheet of glass, where an aqueous alkali metal silicate solution (4) is cast onto the sheet (1) and then is hardened in a drying process to a prescribed water content, **characterized in that** a region (5) of space above the alkali metal silicate solution (4) applied by casting is divided by a vapour-diffusion retarder (6) into a first layer (5a) of space situated directly above the sheet (1) and a second layer (5b) of space thereabove, where the first layer (5a) of space is brought to a prescribed temperature and relative humidity.

8. Process for the production of a composite made of a plurality of sheets (1, 14) of hard material, in particular sheets of glass, **characterized in that** a process according to any of Claims 1 to 7 produces a foamable layer (4') on a first sheet (1), and that a second sheet (14) is applied onto the dried foamable layer (4'), **in that** the second sheet (14) is placed along an edge at an angle onto the layer (4'), and an assembly liquid (15) is applied in the angle, and **in that** finally the second sheet (14) is laid down onto the layer (4').

9. Process according to Claim 8, **characterized in that** after the application of the second sheet (13) of hard material the composite is subjected to a post-lamination procedure in an autoclave.

10. System for carrying out the process according to any of Claims 1 to 7 comprising
a) a device (3) to hold a sheet (1) of hard material;
b) a heating system (3, 10) for the heating of an underside of the sheet (1);
c) a device (9) with a heating unit for the temperature control of a region (5) of space above the sheet (1) to a prescribed temperature (8) and with a humidifier unit and/or dehumidifier unit to adjust the humidity of the temperature-controlled ambient air; and
d) a control system for the control of the heating system (3, 10) and of the device (9) for temperature control, designed in such a way that the sheet (1) can be exposed on the underside to a temperature (7) which is higher by a temperature difference ΔT (12) than the prescribed temperature (8) of the region of space above the sheet (1), where the temperature difference ΔT (12) is at most 5°C, preferably at most 3°C.

11. System according to Claim 10, for carrying out the process according to Claim 8, **characterized by** a vapour-diffusion retarder (6) arranged above the sheet (1) of hard material and dividing the region (5) of space into two layers (5a, 5b) of space situated one above the other.

12. System according to Claim 10 or 11, **characterized in that** the heating system (3, 10) comprises a hotplate (3), in particular a metal plate, which at the same time serves as support for the sheet (1) of hard material, where a surface of the hotplate (3) is heatable in such a way that the maximal temperature difference between any desired first location on the surface and any desired second location on the surface is at most 0.4°C.

## Revendications

1. Procédé pour fabriquer une couche (4') pouvant être moussée sur une plaque (1), en particulier une plaque en verre, pour la fabrication d'un élément de protection contre le feu (16), en particulier un verre antifeu, une solution (4) aqueuse de silicate de métal alcalin étant versée sur la plaque (1) et ensuite solidifiée dans un procédé de séchage à pression ambiante à une teneur en eau prédéfinie, **caractérisé en ce qu'**une zone spatiale (5) au-dessus de la solution (4) de silicate de métal alcalin versée est amenée à une température prédéfinie (8) et la plaque (1) est sollicitée par le bas par un système chauffant (3, 10) à une température (7) supérieure d'une différence de température ΔT (12) à la température prédéterminée (8), la différence de température ΔT étant d'au plus 5°C, de préférence d'au plus 3°C, et l'humidité de l'air de la zone spatiale (5), au moins pendant une première phase, étant maintenue à plus de 70-80% et **en ce qu'**une température (8) de la zone spatiale (5) est élevée progressivement jusqu'à ce que la solution (4) de silicate versée atteigne une température d'environ 50-80°C et ensuite de nouveau abaissée.

2. Procédé selon la revendication 1, **caractérisé en ce que** le système chauffant est formé par une plaque chauffante (3), en particulier une plaque métallique, présentant une surface pouvant être chauffée en contact avec la plaque (1), la surface étant chauffée de manière telle qu'une différence de température maximale entre un premier site quelconque à la surface et un autre site quelconque à la surface est d'au plus 0,4°C.

3. Procédé selon l'une quelconque des revendications 1 ou 2, **caractérisé en ce que** la teneur en eau prédéfinie est de 25-35% en poids.

4. Procédé selon l'une quelconque des revendications 1 à 3, **caractérisé en ce que** la solution (4) aqueuse de silicate de métal alcalin présente une proportion de 30-40% en poids, de préférence d'environ 35% en poids, de silicate de métal alcalin et de 60-70% en poids d'eau, le silicate de métal alcalin étant un silicate de sodium présentant un rapport molaire de SiO₂ à oxyde de sodium d'environ 3,3:1.

5. Procédé selon la revendication 4, **caractérisé en ce que** la solution de silicate (4) comprend en outre une proportion de 0,3-4%, de préférence de 0,5-1,5%, de polyalcools et de 0,005-0,2%, de préférence de 0,008-0,020%, d'un agent tensioactif.

6. Procédé selon l'une quelconque des revendications 1 à 5, **caractérisé en ce que** la zone spatiale (5) au-dessus de la solution de silicate de métal alcalin versée est amenée à une humidité de l'air prédéfinie.

7. Procédé, en particulier selon l'une quelconque des revendications 1 à 6, pour fabriquer une couche (4') pouvant être moussée sur une plaque (1), en particulier une plaque en verre, une solution (4) aqueuse de silicate de métal alcalin étant versée sur la plaque (1) et ensuite solidifiée dans un procédé de séchage à une teneur en eau prédéfinie, **caractérisé en ce qu'**une zone spatiale (5) au-dessus de la solution (4) de silicate de métal alcalin versée est divisée par un frein (6) de diffusion de la vapeur en une première couche spatiale (5a) se trouvant directement au-dessus de la plaque (1) et une deuxième couche spatiale (5b) située au-dessus de celle-ci, la première couche spatiale (5a) étant amenée à une température prédéfinie et à une humidité relative prédéfinie.

8. Procédé pour la fabrication d'un composite constitué de plusieurs plaques (1, 14), en particulier de plaques de verre, **caractérisé en ce qu'**une couche (4') pouvant être moussée est produite par un procédé selon l'une quelconque des revendications 1 à 7 sur une première plaque (1) et **en ce qu'**une deuxième plaque (14) est appliquée sur la couche (4') pouvant être moussée, séchée, **en ce que** la deuxième plaque (14) est placée sur la couche (4') le long d'un bord en formant un angle, un liquide montage (15) est appliqué dans l'angle et enfin la deuxième plaque (14) est posée sur la couche (4').

9. Procédé selon la revendication 8, **caractérisé en ce que** le composite est poststratifié après l'application de la deuxième plaque (13) dans un autoclave.

10. Installation pour la réalisation du procédé selon l'une quelconque des revendications 1 à 7, comprenant
a) un dispositif support (3) pour une plaque (1) ;
b) un système chauffant (3, 10) pour chauffer une face inférieure de la plaque (1) ;
c) un dispositif (9) présentant une unité chauffante pour la régulation thermique d'une zone spatiale (5) au-dessus de la plaque (1) à une température (8) prédéfinie et une unité d'humidification et/ou de déshumidification pour régler une humidité de l'air environnant régulé thermiquement ; et
d) un dispositif de commande pour commander le système chauffant (3, 10) et le dispositif (9) pour la régulation thermique, qui est conçu de manière telle que la plaque (1) peut être sollicitée sur la face inférieure par une température (7), qui est supérieure d'une différence de température ΔT (12) à la température prédéfinie (8) de la zone spatiale au-dessus de la plaque (1), la différence de température ΔT (12) étant d'au plus 5°C, de préférence d'au plus 3°C.

11. Installation selon la revendication 10, pour la réalisation du procédé selon la revendication 8, **caractérisée par** un frein (6) de diffusion de la vapeur qui est disposé au-dessus de la plaque (1) et qui divise la zone spatiale (5) en deux couches spatiales superposées (5a, 5b).

12. Installation selon la revendication 10 ou 11, **caractérisée en ce que** le système chauffant (3, 10) comprend une plaque chauffante (3), en particulier une plaque métallique, qui sert simultanément de support pour la plaque (1), une surface de la plaque chauffante (3) pouvant être chauffée de manière telle qu'une différence de température maximale entre un premier site quelconque à la surface et un deuxième site quelconque à la surface est d'au plus 0,4°C.
